# EUROPEAN PATENT APPLICATION

(11) **EP 2 568 519 A1**
(43) Date of publication of application: **13.03.2013**
(21) Application number: 11777478.6
(22) Date of filing: 06.05.2011
(51) Int. Cl.: H01M 2/34, H01C 7/02

(54) **PTC DEVICE AND SECONDARY BATTERY EQUIPPED WITH SAME**

(30) Priority: 06.05.2010 JP 2010106343
(71) Applicant: Tyco Electronics Japan G.K., Takatsu-ku Kawasaki-shi Kanagawa 2138535 (JP); FDK Twicell Co., Ltd., Gunma 370-0071 (JP)
(72) Inventor: TANAKA, Arata, Inashiki-shi Ibaraki 300-0626 (JP)
(74) Representative: Johnstone, Douglas Ian
(86) International application number: PCT/JP2011/060582
(87) International publication number: WO 2011/138959

(57) **Abstract**

Disclosed are: a battery pack comprising a PTC device and a secondary battery; and a PTC device which enables the reduction in size of an electric device such as a dry-cell-type secondary battery. The PTC device comprises
(1) a PTC element which comprises
(A) a layered polymer PTC element comprising
(a1) an electrically conductive filler and
(a2) a polymeric material and

(B) a PTC element comprising metal electrodes arranged on both surfaces of the polymer PTC element and

(2) a lead of which at least a part is placed on each of the metal electrodes in the PTC element and which is connected to the metal electrodes through an electrically conductive material, wherein an exposed part of the electrically conductive material is covered with a protective member which comprises a material capable of absorbing or including an alkali.

## Description

### Technical Field

The present invention relates to a PTC device as well as an electrical device, for example a secondary battery, comprising same.

### Background Art

Polymer PTC components, comprising laminar PTC elements containing conductive fillers and polymer materials, and metal electrodes disposed on the both surfaces of the laminar polymer PTC element, are widely used in various electrical devices. For example, such a PTC component is used as a circuit protection device in a secondary battery charging circuit in order to prevent a problem of overcharging and the like when a secondary battery of a cell phone is being charged. This PTC component is disposed in a protection circuit via leads, and a PTC device comprising the PTC component and the leads, and the protection circuit are disposed outside the positive electrode terminal of a secondary battery; these together make up an electrical device, and are used as the so-called "battery pack". Since an electrical apparatus has the battery pack embedded therein, the electrical apparatus may be made more compact if the embedded battery pack could be made more compact.

On the other hand, various types of dry-cell type secondary batteries are being used. Among such secondary batteries, in the case of a size AA or a size AAA cell for example, because there is a constraint in enlarging its volume it occupies, no PTC component is not provided therein.

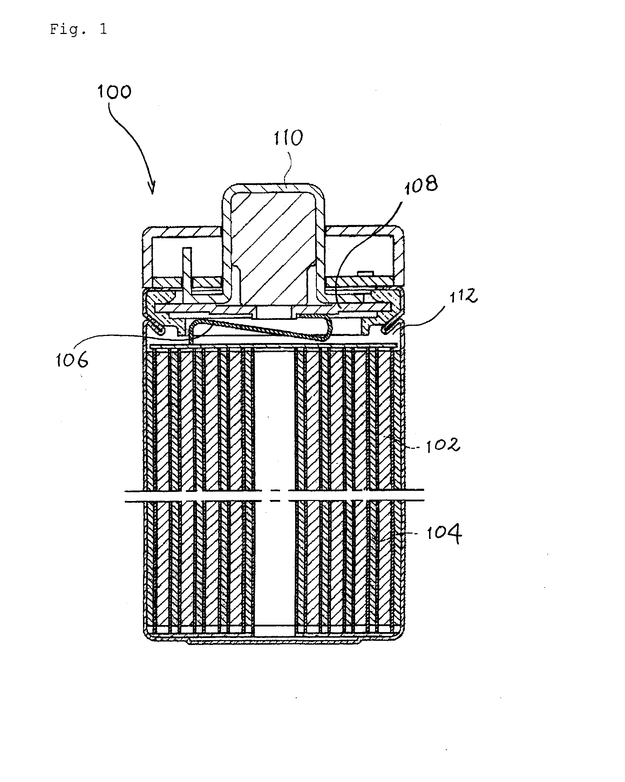

Figure 1 shows a nickel hydride battery, as an example of such a dry-cell type secondary battery, schematically as a cross-section so that its internal structure may be seen. In this battery 100, nickel hydroxide is used as the positive electrode 102 and a hydrogen absorbing alloy is used as the negative electrode 104, with a separator and an electrolyte present between the electrodes. When discharging for example, hydrogen absorbed in the alloy discharges electrons, and hydrogen ions migrate in the electrolyte from the negative electrode to the positive electrode. The positive electrode is connected to a positive electrode tab 106, which is connected to a positive electrode terminal 110 via a sealing plate 108.

The electrolyte employed comprises an alkali as a base and contains for example a potassium salt such as potassium hydroxide. Various salts, such as those of sodium, lithium, etc., are used as other alkalis in some cases. Such alkalis are generally corrosive so that the positive electrode tabs are exposed to an environment of such alkaline. Therefore, a material having resistance to the alkaline corrosion needs to be selected for the material to be used as the positive electrode tab. For example, nickel is used as the material of the positive electrode tab. Nickel forms a passive material in the alkaline environment, as a result of which it has resistance to the corrosion.

### Prior Art Reference

### Patent Reference

Patent Reference 1: Japanese Patent Publication No. 2008-181855

### Summary of the Invention

### Problem to be Solved by the Invention

The inventor concentrated their investigation on making a PTC device, a battery pack comprising the PTC device and a secondary battery, and a dry-cell type secondary battery more compact, as a result of which it has been concluded that, in the above dry-cell type secondary battery, if the PTC device could be disposed in a space 112 where the positive electrode tab 106 exists (this space may herein also be called a "positive electrode tab space"), the volume of the secondary battery may be made smaller. Also, it has been concluded that, in the battery pack, if the PTC device disposed outside the secondary battery could be disposed within the secondary battery, the volume of the battery pack may be made smaller.

However, in order to dispose the PTC device in the positive electrode tab space, or to dispose the PTC device within the secondary battery of the battery pack, the alkaline corrosion as described above needs to be considered. After further studies as to this, it has been found that, among the various elements forming the PTC device, by covering a part(s) that may be adversely affected by the corrosion, etc., by the alkali contained in the electrolyte of the secondary battery with a material that is able to absorb or envelop the alkali, such an adverse effect is suppressed to a minimum, resulting in the PTC device of the present invention.

### [Means to Solve the Problem]

Therefore, according to the first aspect, the present invention provides a PTC devices comprising:
(1) a PTC component comprising:
   (A) a laminar polymer PTC element containing
      (a1) an electrically conductive filler, and
      (a2) a polymer material, and
   (B) a metal electrode disposed on a surface of each side of the polymer PTC element; and
(2) a lead positioned at least in part on the metal electrode of the PTC component, and connected to the metal electrode by an electrically conductive material; characterized by an exposed part of said conductive material being covered by a protective member containing a material that is able to absorb or envelop an alkali.

Among the elements constituting the PTC device of the present invention, the PTC component is well-known, and such a PTC component may be used. The lead is an element required to electrically connect the PTC component to a prescribed circuit; this per se also well-known, and such a lead, e.g. a nickel lead, a nickel-plated stainless steel lead, a nickel-iron alloy (covar) lead, and the like, may be used. Further, the electrically conductive material connecting each of the metal electrodes of the PTC component to each of the leads respectively is not restricted in particular as long as the two may be electrically connected; in the present invention also, such an electrically conductive material may be used. For example, solder, solder paste, electrically conductive adhesive, and the like, may be used.

The present invention is useful in a case where such an electrically conductive material may be adversely affected, e.g. corroded, by the electrolyte constituting the battery, in particular an alkaline component contained therein, for example a salt and/or an ion of an alkaline metal such as sodium, potassium, lithium, etc. Such a case corresponds to a case wherein an electrically conductive material contains, for example, tin, zinc, lead, or the like. The present invention is particularly useful when using in particular solder as the electrically conductive material, in particular lead-free solder, for example tin, silver and copper alloy solder, tin and bismuth alloy solder, tin and indium alloy solder, or the like.

In the present invention, the "material that is able to absorb or envelop an alkali" means a material that can temporarily or permanently take in a salt and/or an ion of the alkaline metal (in particular sodium, potassium, and/or lithium). Various such materials are known, such as, by way of example, crown ethers having a particular structure and/or a functional group (for example cyclodextrine), grime, etc.

The materials that trap the ion and/or salt of the alkaline metal such as lithium, potassium, sodium, or the like are disclosed, for example, in Japanese patent Kokai publication Nos. JP 06-28914 A (a polymer having a crown ether as a side chain), JP 2003-187864 A (a glyme, a crown ether), JP 2002-241376 A (a crown ether), JP 2003-249367 A (a crown ether), JP 2005-63871 A (a crown ether), and JP 06-13110 A (a glyme, a crown ether, a cryptand), etc. For example, various types of organic polymers that form crown ether structures and have various functional groups as the side chains as necessary are disclosed.

The contents of these patent publications constitute, by reference, a part of this specification except when particularly unsuitable for solving the problem of the present invention.

Such "material that is able to absorb or envelop an alkali" may in some cases form by itself the protective member on the above mentioned exposed part of the electrically conductive material, but may also be present in the form of mixture with other components (for example, an excipient such as a resin, a solvent, or a plasticizer) as needed. The protective member may be in any suitable form. The protective member may be in the form of a protective coating. In this case, the material alone or in the mixture thereof, as described above, is applied, for example by brushing, spraying, etc., depending on the form of such material, so as to cover the exposed part.

In other embodiment, a film may be obtained from the material alone or in the mixture thereof, as described above, and the PTC component may be enveloped by this film so that only the end of the lead protrude. In other words, the protective member may be in a film form enveloping the PTC component. In a further embodiment, most of the PTC component, including the exposed part, may be enveloped by the material alone or in the mixture thereof, as described above, by insert molding wherein such material in molten form is injected into a mold in which the PTC component is disposed beforehand. In other words, the protective member may be a molded member of the material alone or in the mixture thereof, enveloping the PTC component.

In the broadest aspect of the present invention, in the PTC device of the present invention, the "material that is able to absorb or envelop an alkali" is disposed such that at least a portion of a periphery of the PTC component is covered. In other words, said portion may be the electrically exposed part of the electrically conductive material as described above, or it may not be such exposed part. According to a preferred embodiment, at least the exposed part is covered by such material. For example, substantially the expose part only, or the exposed part and its surrounding part are covered. Needless to say, the protective member may cover substantially the entire PTC component and leads, with the exception of the lead ends.

According to one embodiment of the present invention, particles or a small piece of film of the aforementioned material alone or in the mixture thereof, in granular form or a small piece of film, is disposed on at least a portion of the PTC component surface, preferably on the exposed part of the electrically conductive material or its neighborhood, or the exposed part of the electrically conductive material and its neighborhood; in order to prevent the particles (or powder) or the small piece from moving, the PTC component and the particles or the small piece disposed thereon are, for example, enveloped together by a thin film (of a resin that is substantially inert towards the electrolyte alkali) with proviso that the ends of the leads are protruding from the enveloping film. In such embodiment, the electrolyte alkali in the vicinity of the PTC component is captured and prevented from coming in contact with the electrically conductive material, so that the adverse effects caused by the alkali on the PTC device may be prevented beforehand.

Various such PTC devices of the present invention can be disposed inside a secondary battery, in particular within its positive electrode tab space, and function as a positive electrode tab. Therefore, the present invention, in the second aspect, provides a secondary battery as an electrical device. Such a secondary battery may be a dry cell type. In other embodiment, it may be in the form of a battery pack including a PTC device on its outside. It is noted that as far as the PTC device of the present invention can be used as a protective component, the present invention also provides for other electrical device containing such a PTC device.

This secondary battery comprises a positive electrode, a negative electrode and a separator and an electrolyte disposed therebetween, and is characterized by having the PTC device of the present invention, more specifically the leads of the PTC device, electrically connected, directly or indirectly, to and between the positive electrode and the positive electrode tab. Such a secondary battery of the present invention may be a dry cell type, however, in other embodiment as mentioned above, a secondary battery of the present invention may be in the form of a battery pack including a protection circuit and the PTC device of the present invention on the outside of the secondary battery.

### Effect of the Invention

In the PTC device of the present invention, because the exposed part of the electrically conductive material, which is likely to be adversely affected by the corrosion due to the alkali contained in the electrolyte, is covered by the protective member of a "material that is able to absorb or envelop an alkali", even if the PTC device is disposed under an alkaline environment, the protective member will absorb and/or envelop the alkali, the alkali is prevented from substantially reaching the electrically conductive material, as a result of which the effect of the corrosion on the electrically conductive material, and therefore the PTC device, may be suppressed to a minimum.

Thus, even if the PTC device is disposed in an environment of the electrolyte contained in the secondary battery, or the electrolyte and the PTC device accidentally come in contact, the adverse effects that the PTC device receives from the electrolyte is minimal, so that the PTC device can function as a circuit protection device.

In particular, when the PTC device is disposed in an extra space within the secondary battery, a space needed for the PTC device may be saved. For example, the PTC device of the present invention may be disposed in the above mentioned positive electrode tab space of the secondary battery.

### Brief Description of Drawings

[Figure 1] Figure 1 shows a cross-section of a secondary battery with its internal structure illustrated schematically.
[Figure 2] Figure 2 shows a PTC device according to one embodiment of the present invention schematically in its cross-section.
[Figure 3] Figure 3 shows a PTC device according to other embodiment of the present invention schematically in its cross-section.
[Figure 4] Figure 4 shows a PTC device according to a further embodiment of the present invention schematically in its cross-section.
[Figure 5] Figure 5 shows the secondary battery illustrated in Figure 1 having a PTC device of the present invention.

### Description of Embodiments

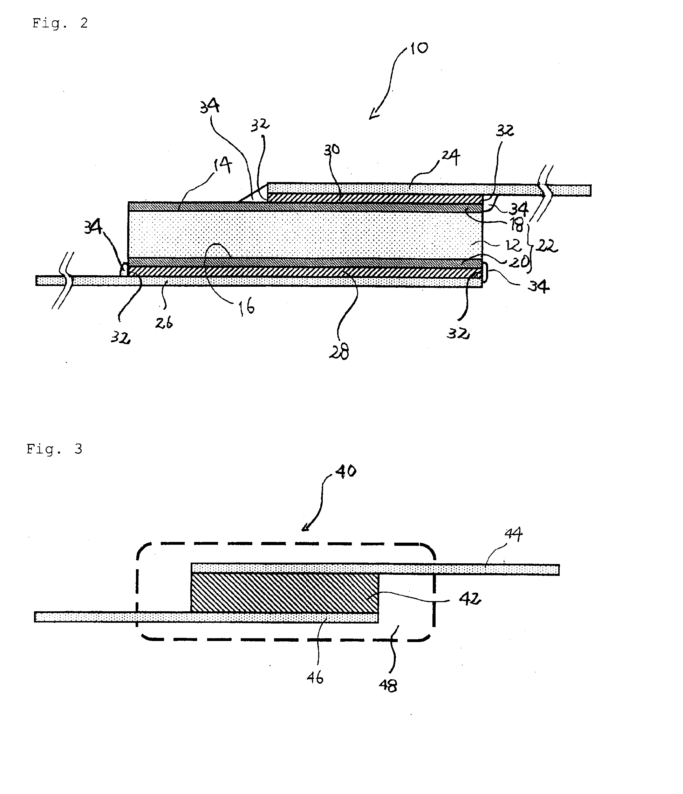

The present invention is described in more detail below with reference to the drawings. Figure 2 shows a PTC device according to one embodiment of the present invention. The illustrated PTC device 10 comprises a PTC component 22 having a laminar polymer PTC element 12 containing an electrically conductive filler and a polymer material, and metal electrodes (e.g. metal foil electrodes) 18 and 20 on the surfaces 14 and 16 on the both sides of the PTC element, and leads 24 and 26.

The lead 24 is connected electrically to a part of the metal electrode 18 by an electrically conductive material 28, and the lead 26 is connected electrically to the entire metal electrode 20 by an electrically conductive material 30. As a result, the electrically conductive material has parts on the side surfaces 32 of the PTC component 22 that are exposed if there is no protective member present.

In the PTC device 10 of the present invention, such exposed parts of the electrically conductive material are covered by protective coatings 34 containing a material that is able to absorb or envelop an alkali, as protective members.

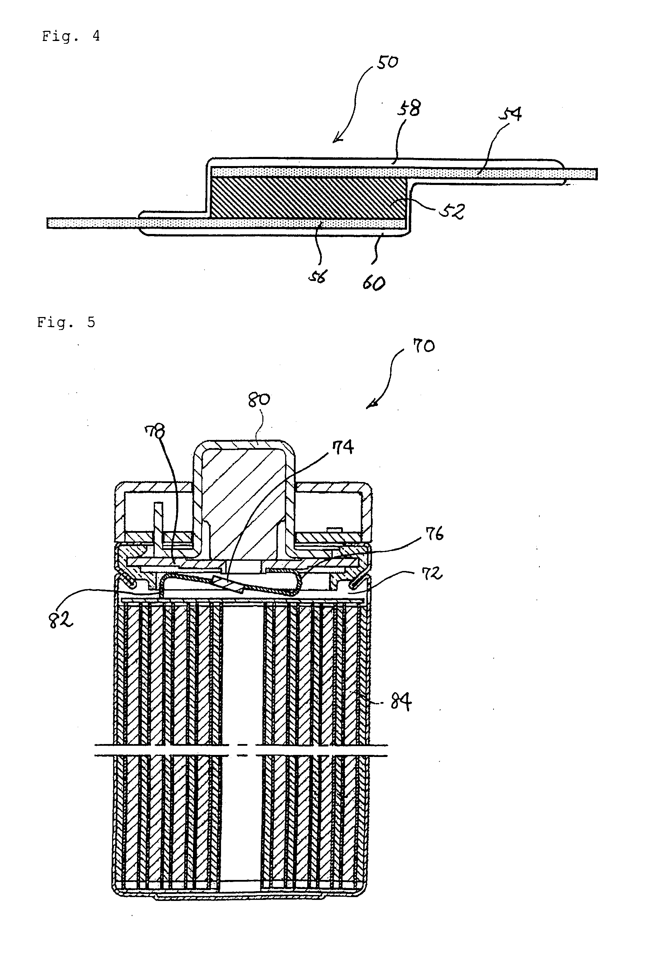

The protective coating may be in any form; according to the embodiment shown in Figure 2, the side surfaces of the electrically conductive material as the exposed parts and a relatively narrow region(s) above and/or below the side surfaces are covered by the coatings. Such a protective coating may be formed by applying a protective coating forming material (e.g. a solvent or dispersion liquid containing the material than is able to absorb or envelop an alkali) by brushing, spraying, etc., and drying when needed. Needless to say, the protective coating may cover substantially the entire PTC components and leads with the exception of the lead ends. In this case, the protective coating may be substantially in a similar form as films (58, 60) in Figure 4 below.

Figure 3 shows schematically a PTC device according to other embodiment of the present invention. In the embodiment shown, the PTC device 40 comprises a PTC component 42 and leads 44 and 46 on its both sides. This PTC device has a molded member 48 around it. In the embodiment shown, the PTC component 42 is illustrated as a whole for the sake of simplicity, and illustration of the electrically conductive materials positioned between the PTC component 42 and the leads 44, 46 have been omitted.

Such a device may be manufactured by inserting a PTC component connected to leads in a mold, then performing injection molding wherein a molding material containing the material that is able to absorb or envelop an alkali is injected into the mold and solidified, thereby forming the molded member 48 as a protective member for the exposed surface of the PTC component 42 including the exposed parts of the electrically conductive material. However, as shown in Figure 3, the ends of the leads protrude from the molded member. Therefore, during the injection molding, the PTC component needs to be inserted in the mold such that the molded member will not be formed on the ends of the leads.

Figure 4 shows a PTC device 50 according to a further embodiment of the present invention. In the embodiment shown, the PTC device comprises a PTC component 52 and leads 54 and 56 on its both sides. The PTC device is sandwiched between two pieces of films 58 and 60, with the ends of the leads 54 and 56 protruding outward. As is easily understood, the films 58 and 60 cover the exposed surface of the PTC component, including the exposed parts of the electrically conductive material, and the exposed parts of the leads (excluding, however, their ends), and may function as a protective member of the PTC device of the present invention. As in Figure 3, in the embodiment shown, the PTC component 52 is illustrated as a whole for the sake of simplicity, and illustration of the electrically conductive materials positioned between the PTC component 52 and the leads 54, 56 have been omitted.

Such a PTC device may be manufactured by sandwiching the PTC component having leads electrically connected by conductive material between and to the two pieces of the films, with the ends of the leads protruding from the films, and then compression bonding the films together.

Figure 5 shows, schematically as in Figure 1, a secondary battery of the present invention with a PTC device of the present invention incorporated therein. According to the embodiment shown, the secondary battery 70 has the PTC device 74 of the present invention inside the positive electrode tab space 72, and is characterized by the end of one lead 76 being connected to the positive electrode terminal 80 via a sealing plate 78 and the other lead 82 being connected to the positive electrode 84. Thus, with the exception of the PTC device of the present invention being disposed instead of the positive electrode tab, the other parts of the secondary battery of the present invention may be the same as the known secondary battery.

According to other embodiment, the secondary battery of the present invention has a protection circuit on its outside and comprises a PTC device of the present invention disposed on the outside of the secondary battery, for example, on the outside of the positive electrode. In this case, in such a secondary battery, the PTC device is disposed within the protection circuit, these together work to protect the secondary battery, and the secondary battery, the PTC device and the protection circuit constitute a battery pack. Thus, even when the PTC device is disposed outside of the secondary battery, if there is a slight leak of the electrolyte in the secondary battery, the adverse effects from the electrolyte to the electrically conductive material may be suppressed.

### Industrial Applicability

The PTC device of the present invention can suppress the effect of electrolyte in the battery to a minimum even when disposed in the extra space within the secondary battery.

### [Explanation of the Legends]

10 - PTC device; 12 - polymer PTC element; 14, 16 - surface; 18, 20 - metal electrode; 22 - PTC component; 24, 26 - lead; 28, 30 - electrically conductive material; 32 - side; 34 - protective coating; 40 - PTC device; 42 - PTC component; 44, 46 - lead; 48 - molded member; 50 - PTC device; 52 - PTC component; 54, 56 - lead; 58, 60 - film; 70 - secondary battery; 72 - positive electrode tab space; 74 - PTC device; 76 - lead; 78 - sealing plate; 80 - positive electrode; 82 - lead; 100 - nickel hydride battery; 102 - positive electrode; 104 - negative electrode; 106 - positive electrode tab; 108 - sealing plate; 110 - positive electrode terminal.

## Claims

1. A PTC device which comprises:
(1) a PTC component comprising:
(A) a laminar polymer PTC element containing
(a1) an electrically conductive filler, and
(a2) a polymer material, and
(B) a metal electrode disposed on a surface of each side of the polymer PTC element; and
(2) a lead positioned at least in part on the metal electrode of the PTC component, and connected to the metal electrode by an electrically conductive material; **characterized by** an exposed part of said conductive material being covered by a protective member containing a material that is able to absorb or envelop an alkali.

2. The PTC device according to Claim 1, wherein the electrically conductive material contains tin.

3. The PTC device according to Claim 1 or 2, wherein the material that is able to absorb or envelop the alkali is a crown ether.

4. The PTC device according to any one of Claims 1-3, wherein the protective member is in the form of a molded member enclosing the PTC component and the lead, while an end portion of the lead protrudes outwardly from the molded member.

5. The PTC device according to any one of Claims 1-3, wherein the protective member is in the form of a film enclosing the PTC component and the lead, while an end portion of the lead protrudes outwardly from the molded member.

6. A secondary battery which comprises a positive electrode, a negative electrode, and a separator and an electrolyte disposed therebetween, **characterized by** the PTC device according to any one of Claims 1-5 being disposed between the positive electrode and a terminal of the positive electrode.

7. The secondary battery according to Claim 6, which is a dry-cell type, wherein the PTC device is disposed within a positive electrode tab space.

8. The secondary battery according to Claim 6, which is in the form of a battery pack, wherein the PTC device, together with a protection circuit, is disposed outside of the battery.
